# EUROPEAN PATENT SPECIFICATION

(11) **EP 4 592 525 B1**
(45) Date of publication and mention of the grant of the patent: **25.11.2026**
(21) Application number: 24382062.8
(22) Date of filing: 24.01.2024
(51) Int. Cl.: F03D 80/50, F03D 1/06

(54) **METHOD FOR REPAIRING A SHEAR WEB OF A WIND TURBINE ROTOR BLADE AND WIND TURBINE ROTOR BLADE**
VERFAHREN ZUM REPARIEREN EINES SCHERSTEGS EINES WINDENERGIEANLAGEN-ROTORBLATTES UND WINDENERGIEANLAGEN-ROTORBLATT
PROCÉDÉ DE RÉPARATION D'UNE ÂME DE CISAILLEMENT D'UNE PALE DE ROTOR D'ÉOLIENNE ET PALE DE ROTOR D'ÉOLIENNE

(43) Date of publication of application: 30.07.2025
(73) Proprietor: Nordex Energy SE & Co. KG, 22419 Hamburg (DE); Nordex Energy Spain, S.A.U., 31395 Barasoain (Navarra) (ES)
(72) Inventor: Calmon, Pierre, 31395 Barasoain (ES); Pipo Benito, Alvaro, 31395 Barasoain (ES); Villar Ochoa, Iker, 31395 Barasoain (ES); Garcia Aguerri, Iosu, 31395 Barasoain (ES); Hahn, Felix, 22419 Hamburg (DE)
(74) Representative: Epping - Hermann - Fischer

(56) References cited:
- KR-A- 20140 001 407
- US-B2- 8 747 592
- PATCH COMPOSITE: "Wind Energy Repairs", 31 December 2012 (2012-12-31), XP093179361, Retrieved from the Internet <URL:https://www.compositepatch.com/content/6-wind-blade-repair>
- CRIPPS DAVID: "Wind Turbine Blade Repair | Wind Systems Magazine", 8 April 2011 (2011-04-08), XP093179151, Retrieved from the Internet <URL:https://www.windsystemsmag.com/wind-turbine-blade-repair/>

## Description

The invention concerns a method for repairing a shear web of a wind turbine rotor blade, wherein the wind turbine rotor blade comprises two spar caps and the shear web. The invention also addresses a wind turbine rotor blade.

Wind turbines with wind turbine rotor blades are widely known from the state of the art and are used to convert wind energy into electrical energy. Wind turbine rotor blades are typically manufactured according to one of two constructional designs, namely a design where a thin aerodynamic shell is glued or otherwise bonded onto a spar beam, or a design where spar caps, also called main laminates, are integrated into the aerodynamic shell. With regard to the latter design, the spar caps are integrated into the shell and are molded together with the aerodynamic shell. In this design, the spar caps constitute the load carrying structure. The blade shells are typically designed with at least one spar cap integrated in the pressure side shell part and at least one spar cap integrated in the suction side shell part. The spar caps of the pressure and suction side are typically connected via one or more shear webs, which for instance may be C-shaped or I-shaped. Such a shear web reinforces the blade structure and absorbs shear forces.

As with other components of a wind turbine rotor blade, shear webs can wear out and suffer damage, wherein, for example, a crack can be formed which mechanically weakens the structure of the shear web. This can have severe consequences for the wind turbine rotor blade, up to and including complete breakdown. Relevant background art is disclosed in for instance US8747592 B2 and KR20140001407 A.

One task underlying the invention is to provide a concept to reliably and efficiently repair a shear web of a wind turbine rotor blade.

This object is solved by the independent claim. Advantageous embodiments are given in the sub-claims.

According to a first aspect, a method for repairing a shear web of a wind turbine rotor blade is disclosed. The wind turbine rotor blade comprises two spar caps and a shear web. The shear web comprises a root end and a tip end and extends between the two spar caps along a longitudinal direction of the rotor blade from the root end to the tip end. The shear web has two opposite longitudinal edges, each longitudinal edge facing a respective spar cap and running along the longitudinal direction. The shear web has a first lateral side and a second lateral side running between the two opposite longitudinal edges. The shear web has a defect at the root end, the defect running essentially along the longitudinal direction. The method comprises the steps of:
- providing a defect-bridging device having a first cover plate and a second cover plate, both the first cover plate and the second cover plate comprising an inner surface and an outer surface, and
- bonding the first cover plate with its inner surface onto a first surface region of the first lateral side and bonding the second cover plate with its inner surface onto a second surface region of the second lateral side, such that both cover plates at least partly cover the defect.

With a standard repair approach, laminate layers and core material of the shear web would conventionally be removed and replaced with new repair material. Such a conventional approach would comprise a lot of manual work, e.g. layup of repair laminate layers by hand, and typically takes about two to three working shifts.

With the inventive method as described herein, a quick, easy and secure repair of a defect of a shear web is enabled. The method features the use of a prefabricated defect-bridging device, which comprises prefabricated cover plates. The cover plates are simply bonded in place to at least partly cover the defect. With these plates, the defect is structurally bridged and the shear web is fully functional again.

The inventive method has the following further advantages:
- The time needed for repairing can be drastically reduced, in particular to one shift (instead of two to three shifts as explained above).
- The repair process is a very simple process. For example, less experienced technicians can repair a defect with sufficiently good quality.
- Very good laminate quality can be ensured with the prefabricated parts.
- A short-term application is possible to cover a defect of the shear web with the pre-fabricated parts.
- Costs for repair are reduced, in particular due to the decrease in working hours.

The defect means a structural defect, e.g. a delamination, a crack or combinations thereof. A defect which is not repaired could lead to a complete failure, e.g. break, of the shear web.

The term "essentially" means that the defect extends mainly along the longitudinal direction. However, the defect, e.g. the crack, does not necessarily run linearly or parallel to the longitudinal direction.

The first and second cover plates are prefabricated parts, as mentioned before.

The term "at least partly cover the defect" means that nearly all portions of the defect are covered by the cover plates. Preferably, the cover plates cover the defect completely and extend beyond the defect on all sides of the defect over a specified area.

According to an embodiment, the surface regions are pre-treated prior to the bonding step. For example, the surface regions are cleaned, grinded and/or roughened. Thus, a particularly good bonding of the plates with the shear web is achieved.

According to an embodiment, the inner surface of the first cover plate and the inner surface of the second cover plate is covered by a peel ply. A peel ply protects the respective surface.

According to an embodiment, the peel ply covering the inner surfaces of the first and second cover plates is removed prior to the bonding step. This makes it possible to protect the inner surfaces of the cover plates until shortly before the bonding step and discards the need of preparing this surface by grinding.

According to an embodiment, prior to the bonding step, adhesive is applied to the inner surface of the first cover plate and the inner surface of the second cover plate to bond them to the respective surface region. For example, the inner surfaces are provided with adhesive shortly after the peel plies are removed. This ensures a high-quality bonding process.

According to an embodiment, prior to the step of bonding, adhesive is applied to each of the surface regions. This ensures a high-quality bonding process wherein, alternatively to the above, the shear web, not the cover plates, is provided with adhesive. However, to improve the bonding process even more, both the surface regions of the shear web as well as the inner surfaces of the cover plates are provided with adhesive. In one embodiment, a two-component adhesive is used, which is applied to the surface regions and/or to the inner surfaces. This can result in a particularly strong or reliable bonding.

According to an embodiment, prior to the bonding step, a mesh is applied to each of the two surface regions, each mesh acting as a spacer. The mesh guarantees a necessary or predetermined bonding thickness, i.e. a thickness of the adhesive. This ensures a suitable bonding quality that structurally connects the cover plates to the shear web and provides for the intended lifetime of the shear web.

According to an embodiment, after the bonding step, the two cover plates are pressed firmly against the corresponding lateral sides by applying a vacuum. For example, a vacuum device is provided which comprises at least one vacuum pump, one or more hoses, etc. With such a setting, vacuum can be applied to firmly press the cover plates against the shear web. This contributes to a high-quality bonding wherein, in particular, any unwanted air and excess adhesive is pressed out of the bonding area.

According to an embodiment, a fleece is provided on the outer surfaces of the cover plates for applying the vacuum. This contributes to an effective and uniform vacuum process.

According to an embodiment, after the bonding step, heat is applied for curing the adhesive. This finishes the bonding process by stably connecting the defect-bridging device to the shear web.

According to an embodiment, the cover plates are additionally screwed to the shear web. For example, the cover plates are screwed to the shear web after the bonding step, but before the steps of applying vacuum or curing. The additional screwing helps to hold the cover plates in position, which simplifies the bonding process and contributes to an overall defect-bridging quality.

According to an embodiment, the first cover plate and the second cover plate each comprise a flange portion wherein, in the bonded state, the flange portions are, additionally to an adhesive bond, connected to each other in a form-fit manner. In other words, the cover plates are in direct, form-fit engagement. This contributes to stable and effective defect-bridging.

According to an embodiment, the flange portions are adapted to a contour of the root end of the shear web. In other words, there is a form-fit engagement of the defect-bridging device with the shear web itself which provides for a very stable and structurally advantageous positioning.

According to an embodiment, each of the two cover plates is a fiber composite component. The layup mimics the original layup of the shear web and therefore ensures returning to design properties after the application.

According to a second aspect, a wind turbine rotor blade for a wind turbine is disclosed. The wind turbine rotor blade comprises two spar caps and a shear web. The shear web comprises a root end and a tip end and extends between the spar caps along a longitudinal direction of the rotor blade from the root end to the tip end. The shear web comprises two opposite longitudinal edges, each longitudinal edge facing a respective spar cap, and running along the longitudinal direction. The shear web has a first lateral side and a second lateral side running between the two opposite longitudinal edges. The shear web has a defect at the root end, the defect running essentially along the longitudinal direction. The wind turbine rotor blade further comprises a defect-bridging device having a first cover plate and a second cover plate, wherein the first cover plate is bonded onto a first surface region of the first lateral side and the second cover plate is bonded on a second surface region of the second lateral side, such that both cover plates at least partly cover the defect.

The wind turbine rotor blade enables the above-mentioned functions and advantages. The above-described embodiments with respect to the first aspect analogously apply to the wind turbine rotor blade.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows a schematic side view of a section of a shear web of the wind turbine rotor blade,
Figure 5 shows a defect-bridging device according to an embodiment of the invention,
Figures 6 to 12 show different views of a defect-bridging device according to an embodiment of the invention,
Figure 13 shows a schematic side view of a section of the shear web according to figure 4 with the defect-bridging device being mounted, and
Figure 14 shows a schematic flow chart of a method for repairing a shear web according to an embodiment of the invention.

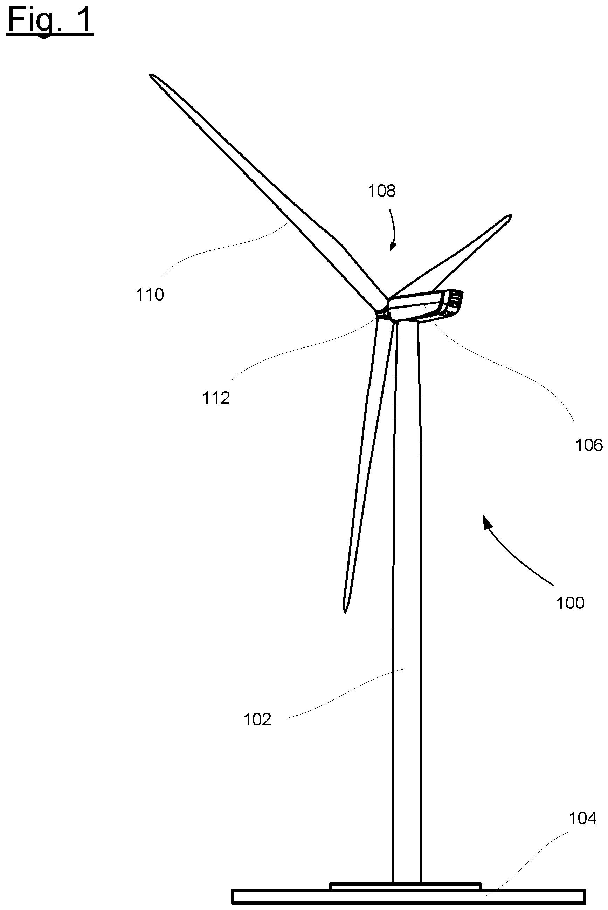

Figure 1 shows a schematic view of a wind turbine 100, which comprises a tower 102. The tower 102 is fixed to the ground by means of a foundation 104. A nacelle 106 is rotatably mounted at one end of the tower 102 opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

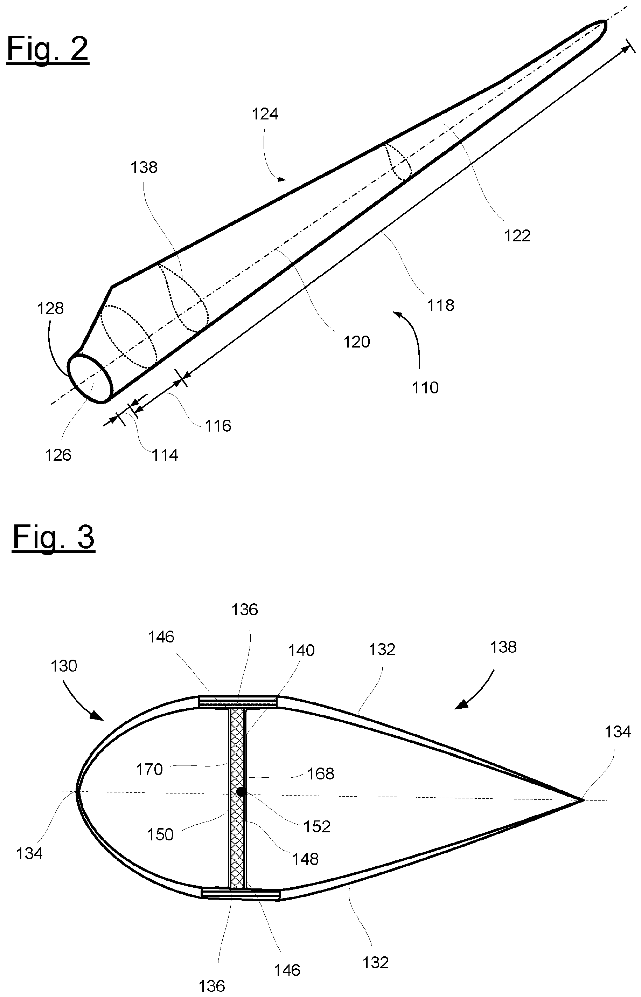

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender.

Figure 3 shows a schematic cross-section profile 138 (see figure 2) of the wind turbine rotor blade 110 running traverse to the longitudinal direction 120. The rotor blade 110 comprises a shell 130, which is comprised by two half-shells 132, wherein one half-shell 132 corresponds to the pressure side 122 and the other one to the suction side 124. The two half-shells 132 are firmly connected to each other along the longitudinal axis at opposite connecting surfaces 134. Each half-shell 132 may have a spar cap 136 embedded in the shell-structure. A spar cap 136 can also be generally named "main laminate" and carries main loads during operation of the rotor blade 110. The rotor blade 110 further comprises at least one shear web 140 connecting the spar caps 136.

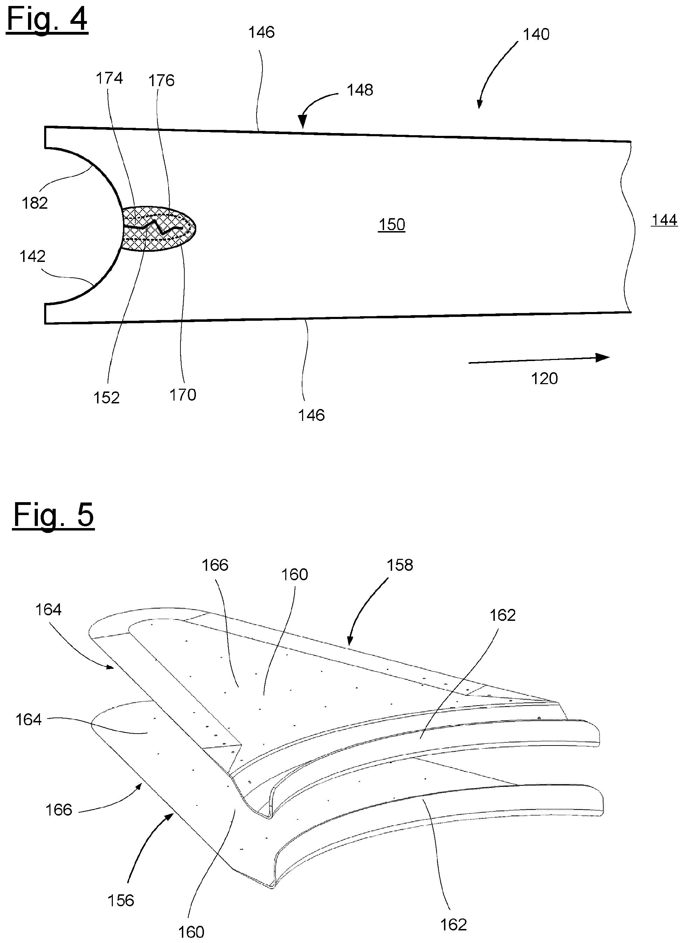

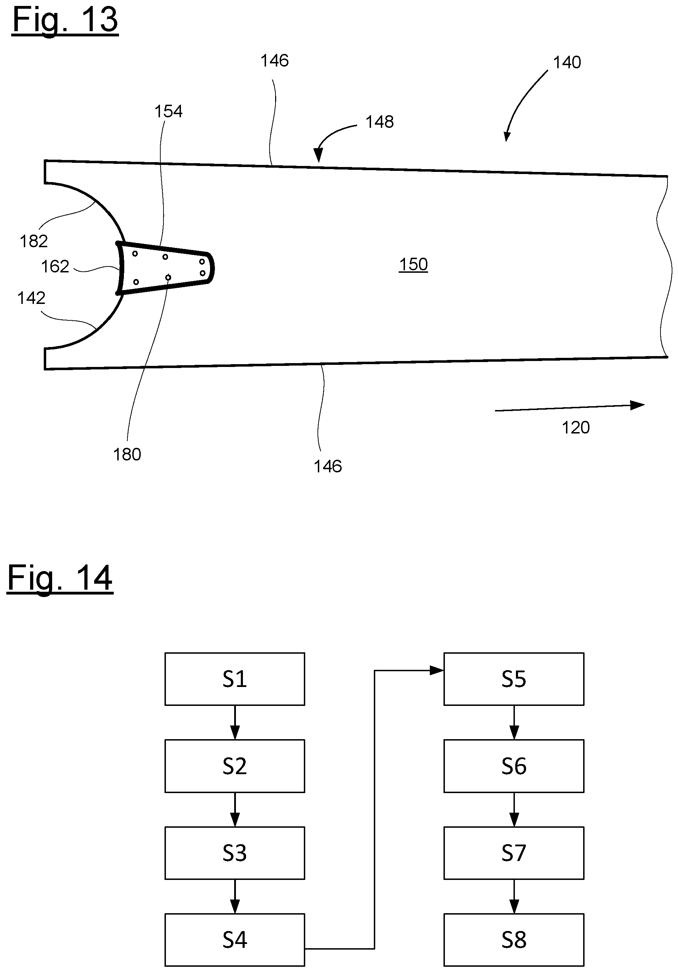

In the following, a method for repairing the shear web 140 of the wind turbine rotor blade 110 according to an embodiment of the invention is described with the aid of figures 4 to 13, wherein figure 13 shows a schematic flow diagram of the method.

Figure 4 shows a schematic side view of a shear web 140. The shear web 140 extends from a root end 142 to a tip end 144 (in the figure 4 the shear web 140 is shown shortened and the tip side end is not shown) along the longitudinal direction 120. The shear web 140 has two opposite longitudinal edges 146, each longitudinal edge 146 facing a respective spar cap 136 and running along the longitudinal direction 120 (see also figure 3). With regard to figure 3, the shear web 140 has a first lateral side 148 and a second lateral side 150 running between the two opposite longitudinal edges 146. The shear web 140 has a defect 152 at the root end 142, the defect 152 being a crack and a surrounding delamination in the shear web 140. The defect 152 runs essentially along the longitudinal direction 120.

In order to repair the defect, in an embodiment of the invention the following steps are performed:

### Step S1:

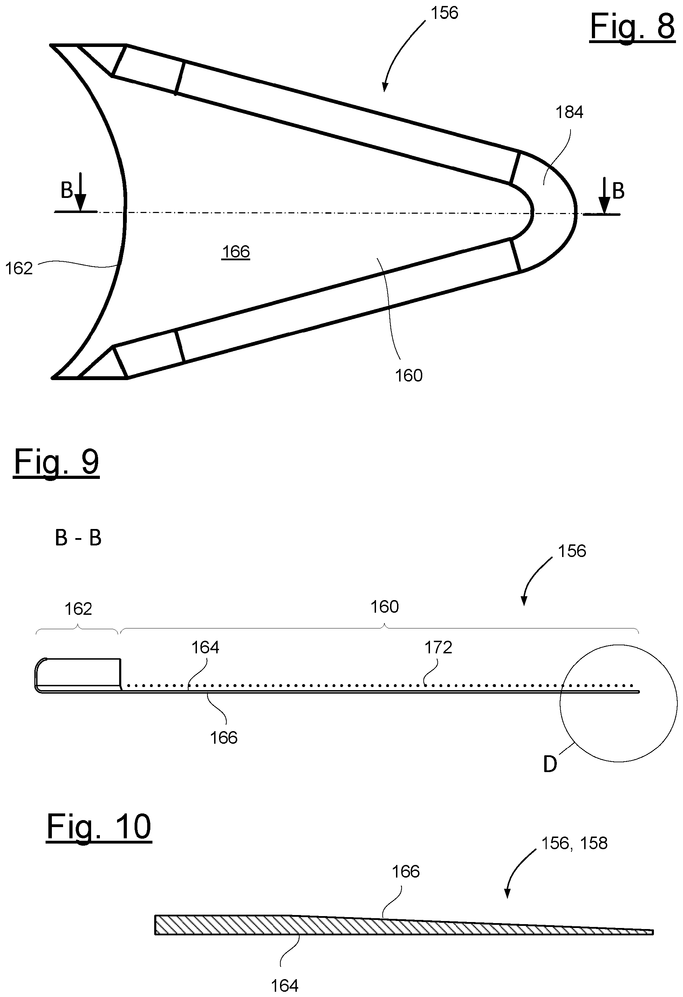

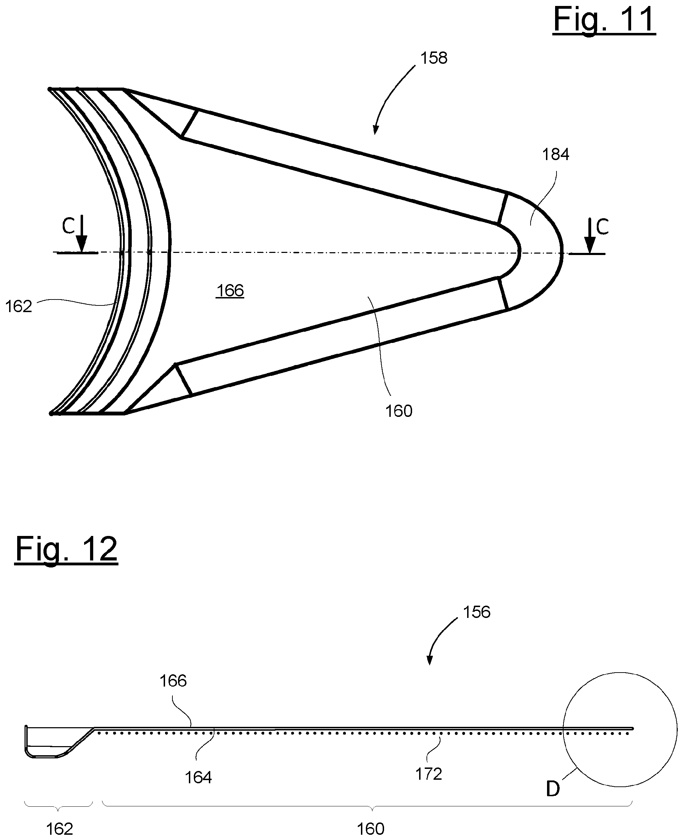

A defect-bridging device 154 (shown in figure 5) having a first cover plate 156 and a second cover plate 158 is provided. The first cover plate 156 is shown in figures 8 to 10 und the second cover plate 158 is shown in figures 11 to 13. Both the first and the second cover plates 156, 158 are prefabricated fiber composite components being configured to fit onto the shear web 140. Each cover plate 156, 158 comprises a base plate 160 and a flange portion 162. Each base plate 160 has an inner surface 164 and an outer surface 166.

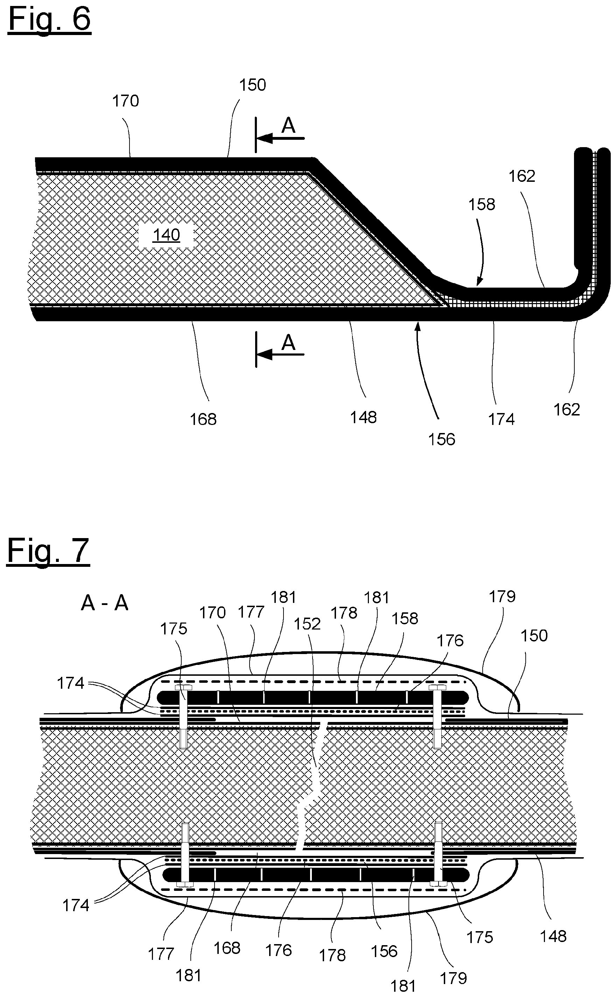

As shown in figure 6, the first cover plate 156 is configured to be bonded onto a first surface region 168 of the first lateral side 148. The second cover plate 158 is configured to be bonded onto a second surface region 170 of the second lateral side 150. As indicated in figure 7, which shows a cross section A-A from figure 6, both surface regions 168, 170 comprise or overlap the defect 152. In other words, the defect 152 is located within the surface regions 168, 170, seen from both lateral sides 148, 150. The first and second cover plates 156, 158 cover the surface regions 168, 170.

As mentioned, both cover plates 156, 158 comprise a flange portion 162. The flange portions 162 are configured to engage each other in a form-fit manner. Thus, the cover plates 156, 158 are mounted to the shear web 140 such that the flange portions 162 directly engage each other form-fittingly. Further, the flange portions 162 are manufactured to fit over the shear web 140, meaning that the end face 182 of the shear web 140 which faces the root of the wind turbine 100 is surrounded or covered in a form-fit manner (see figure 6). Since the end face 182 of the shear web 140 typically has a contour in a curved design, the flange portions 162 are accordingly adapted to follow this curved design, i.e. the contour of the shear web 140 at the end face 182 (see figure 13). The direct connection of the flange portions 162, which is glued together by adhesive 174, adds further strength.

Figure 8 shows a top view onto the outer surface 166 of the first cover plate 156. Figure 9 shows a cross-sectional view B-B of figure 8. Figure 10 shows an enlarged view of the detail D from figure 9.

With regard to figure 9, the inner surface 164 of the first cover plate 156 is covered with a peel ply 172 (indicated by dotted line).

Figure 11 shows a top view onto the outer surface 166 of the second cover plate 158. Figure 12 shows a cross-sectional view A-A of figure 11.

With regard to figure 12, the inner surface 164 of the second cover plate 156 is also covered with a peel ply 172 (indicated by dotted line).

### Step S2:

The surface regions 168, 170 are pre-treated prior to the cover plates 156, 158 being bonded onto them. In this step, for example, the surface regions 168, 170 are roughened such that adhesive can bond to the surface regions 168, 170 very well.

### Step S3:

The peel plies 172 are removed from the cover plates 156, 158.

### Step S4:

Adhesive 174 (as indicated in figure 4 and 7) is applied to each of the surface regions 168, 170. Additionally, adhesive 174 is applied to the inner surfaces 164 of the first and second cover plates 156, 158 for bonding them to the respective surface region 168, 170 at a later stage.

### Step S5:

A mesh 176 is applied to each of the two surface regions 168, 170, each mesh 176 acting as a spacer as already described (see figure 4 and 7 showing the mesh 176 indicated as a cross-like pattern resp. a dotted line).

### Step S6:

The first cover plate 156 is bonded with its inner surface 164 onto the first surface region 168 of the first lateral side 148. Further, the second cover plate 158 is bonded with its inner surface 164 onto the second surface region 170 of the second lateral side 150, such that both cover plates 156, 158 completely cover the defect 152.

### Step S7:

The two cover plates are pressed firmly against the corresponding lateral sides of the shear web by screwing them by means of the bolts 175 to the shear web. Afterwards fleece mats 178 are positioned on top of the outer surfaces of the cover plates 156, 158 and a vacuum device 177 or setup is provided for applying the vacuum. Exemplarily, openings or holes 181 are provided in the cover plates 156, 158 in order that excess air and/or excess adhesive can escape during the vacuum process.

### Step S8:

Finally, a heating mat 179 is positioned and heat is applied for curing the adhesive 174 to fixedly connect the cover plates 156, 158, and thus the defect-bridging device 154, to the shear web 140. This is exemplarily shown in figure 7.

The above-described method enables the functions and advantages as mentioned above. It is noted that at least some of the steps can be performed in a different order. For example, steps S2 and S3 can be exchanged. As another example, the peel plies 172 could be removed after having applied adhesive 174 to the surface regions 168, 170.

Optionally, e.g. after step S6, the cover plates 156, 158 are additionally screwed to the shear web 140. For example, the screws 180 (see figure 13) are provided along an edge of the cover plates 156, 158. These screws 180 ensure the position of the cover plates 156, 158 of the defect-bridging device with respect to the shear web 140 such that the cover plates 156, 158 cannot slip. Further, with the screws 180, any risk of peeling can be avoided.

With regard to the shown cross-sections B-B and C-C according to figures 9 and 12, at a tip 184 of each cover plate 156, 158, the cover plates 156, 158, in particular the base plates 160, have a ramp, meaning that a plate thickness increases towards the root ends 142 (shown in detail D in figure 10).

This optimizes load transitions between the cover plates 156, 158 and the shear web 140.

### Reference signs

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange connection
- 130: shell
- 132: half-shell
- 134: connecting surface
- 136: spar cap
- 138: cross section profile
- 140: shear web
- 142: root end
- 144: tip end
- 146: longitudinal edge
- 148: first lateral side
- 150: second lateral side
- 152: defect
- 154: defect-bridging device
- 156: first cover plate
- 158: second cover plate
- 160: base plate
- 162: flange portion
- 164: inner surface
- 166: outer surface
- 168: first surface region
- 170: second surface region
- 172: peel ply
- 174: adhesive
- 175: bolt
- 176: mesh
- 177: vacuum device
- 178: fleece
- 179: heating mat
- 180: screw
- 181: hole
- 182: end face
- 184: tip

## Claims

1. Method for repairing a shear web (140) of a wind turbine rotor blade (110), the wind turbine rotor blade (110) comprising two spar caps (136) and a shear web (140), wherein the shear web (140) comprises
- a root end (142) and a tip end (144) and extends between the two spar caps (136) along a longitudinal direction (120) of the wind turbine rotor blade (110) from the root end (142) to the tip end (144)),
- two opposite longitudinal edges (146), each longitudinal edge (146) facing a respective spar cap (136) and running along the longitudinal direction (120),
- a first lateral side (148) and a second lateral side (150) running between the two opposite longitudinal edges (146), and
- a defect (152) at the root end (142), the defect (152) running essentially along the longitudinal direction (120),
**characterized in that** the method comprises the steps of:
- providing a defect-bridging device (154) having a first cover plate (156) and a second cover plate (158), both the first cover plate (156) and the second cover plate (158) comprising an inner surface (164) and an outer surface (166), and
- bonding the first cover plate (156) with its inner surface (164) onto a first surface region (168) of the first lateral side (148) and bonding the second cover plate (158) with its inner surface (164) onto a second surface region (170) of the second lateral side (150), such that both cover plates (156, 158) completely cover the defect (152).

2. Method according to claim 1, wherein the surface regions (168, 170) are pre-treated prior to the bonding step.

3. Method according to claim 1, wherein the inner surface (164) of the first cover plate (156) and the inner surface (164) of the second cover plate (158) is covered by a peel ply (172).

4. Method according to claim 3, wherein the peel ply (172) covering the inner surfaces (164) of the cover plates (156, 158) is removed prior to the bonding step.

5. Method according to any one of the preceding claims, wherein, prior to the bonding step, adhesive (174) is applied to the inner surface (164) of the first cover plate (156) and the inner surface (164) of the second cover plate (158) for bonding them to the respective surface region (168, 170).

6. Method according to any one of the preceding claims, wherein, prior to the bonding step, adhesive (174) is applied to each of the surface regions (168, 170).

7. Method according to any one of the preceding claims, wherein, prior to the bonding step, a mesh (176) is applied to each of the two surface regions (168, 170), each mesh (176) acting as a spacer.

8. Method according to any one of the preceding claims, wherein, after the bonding step, the two cover plates (156, 158) are pressed firmly against the corresponding lateral sides (148, 150) by applying a vacuum.

9. Method according to claim 8, wherein, a fleece (178) is provided on the outer surfaces (166) of the cover plates (156, 158) as part of a vacuum setup.

10. Method according to any one the preceding claims, wherein after the bonding step, heat is applied for curing the adhesive (174).

11. Method according to any one of the preceding claims, wherein the cover plates (156, 158) are additionally screwed to the shear web (140).

12. Method according to any one the preceding claims, wherein the first cover plate (156) and the second cover plate (158) each comprise a flange portion (162), and wherein, in the bonded state, the flange portions (162) are connected to each other in a form-fit manner.

13. Method according to claim 12, wherein the flange portions (162) are adapted to a contour of the root end (142) of the shear web (140).

14. Method according to any one the preceding claims, wherein each of the two cover plates (156, 158) is a fiber composite component.

15. Wind turbine rotor blade (110) for a wind turbine, the wind turbine rotor blade (110) comprising two spar caps (136) and a shear web (140), wherein the shear web (140) comprises
- a root end (142) and a tip end (144) and extends between the spar caps (136) along a longitudinal direction (120) of the wind turbine rotor blade (110) from the root end (142) to the tip end (144),
- two opposite longitudinal edges (146), each longitudinal edge (146) facing a respective spar cap (136), and running along the longitudinal direction (120),
- a first lateral side (148) and a second lateral side (150) running between the two opposite longitudinal edges (146), and
- a defect (152) at the root end (142), the defect (152) running essentially along the longitudinal direction (120), **characterized in that** the wind turbine rotor blade (110) further comprises a defect-bridging device (154) having a first cover plate (156) and a second cover plate (158), wherein the first cover plate (156) is bonded onto a first surface region (168) of the first lateral side (148) and the second cover plate (158) is bonded on a second surface region (170) of the second lateral side (150), such that both cover plates (156, 158) at least partly cover the defect (152).

## Patentansprüche

1. Verfahren zur Reparatur eines Scherstegs (140) eines Windkraftanlagen-Rotorblatts (110), wobei das Windkraftanlagen-Rotorblatt (110) zwei Holmgurte (136) und einen Schersteg (140) aufweist, wobei der Schersteg (140)
- ein Wurzelende (142) und ein Spitzenende (144) aufweist und sich zwischen den beiden Holmgurten (136) entlang einer Längsrichtung (120) des Windkraftanlagen-Rotorblatts (110) vom Wurzelende (142) zum Spitzenende (144) erstreckt,
- zwei gegenüberliegende Längskanten (146) aufweist, wobei jede Längskante (146) einem jeweiligen Holmgurt (136) zugewandt ist und entlang der Längsrichtung (120) verläuft,
- eine erste Seitenfläche (148) und eine zweite Seitenfläche (150) aufweist, die zwischen den beiden gegenüberliegenden Längskanten (146) verlaufen, und
- einen Defekt (152) am Wurzelende (142) aufweist, wobei der Defekt (152) im Wesentlichen entlang der Längsrichtung (120) verläuft,
**dadurch gekennzeichnet, dass** das Verfahren die folgenden Schritte aufweist:
- Bereitstellen einer Defektüberbrückungsvorrichtung (154) mit einer ersten Deckplatte (156) und einer zweiten Deckplatte (158), wobei sowohl die erste Deckplatte (156) als auch die zweite Deckplatte (158) eine Innenfläche (164) und eine Außenfläche (166) aufweisen, und
- Befestigen der ersten Deckplatte (156) mit ihrer Innenfläche (164) auf einem ersten Oberflächenbereich (168) der ersten Seitenfläche (148) und Befestigen der zweiten Deckplatte (158) mit ihrer Innenfläche (164) auf einem zweiten Oberflächenbereich (170) der zweiten Seitenfläche (150), so dass beide Deckplatten (156, 158) den Defekt (152) vollständig abdecken.

2. Verfahren gemäß Anspruch 1, wobei die Oberflächenbereiche (168, 170) vor dem Befestigungsschritt vorbehandelt werden.

3. Verfahren gemäß Anspruch 1, wobei die Innenfläche (164) der ersten Deckplatte (156) und die Innenfläche (164) der zweiten Deckplatte (158) mit einem Abreißgewebe (172) bedeckt sind.

4. Verfahren gemäß Anspruch 3, wobei das die Innenflächen (164) der Deckplatten (156, 158) bedeckende Abreißgewebe (172) vor dem Befestigungsschritt entfernt wird.

5. Verfahren gemäß einem der vorstehenden Ansprüche, wobei vor dem Befestigungsschritt Klebstoff (174) auf die Innenfläche (164) der ersten Deckplatte (156) und die Innenfläche (164) der zweiten Deckplatte (158) aufgetragen wird, um diese an dem jeweiligen Oberflächenbereich (168, 170) zu befestigen.

6. Verfahren gemäß einem der vorstehenden Ansprüche, wobei vor dem Befestigungsschritt Klebstoff (174) auf jeden der Oberflächenbereiche (168, 170) aufgetragen wird.

7. Verfahren gemäß einem der vorstehenden Ansprüche, wobei vor dem Befestigungsschritt auf jeden der beiden Oberflächenbereiche (168, 170) ein Netzgewebe (176) aufgebracht wird, wobei jedes Netzgewebe (176) als Abstandshalter dient.

8. Verfahren gemäß einem der vorstehenden Ansprüche, wobei nach dem Befestigungsschritt die beiden Deckplatten (156, 158) durch Anlegen eines Unterdrucks fest gegen die entsprechenden Seitenflächen (148, 150) gedrückt werden.

9. Verfahren gemäß Anspruch 8, wobei auf den Außenflächen (166) der Deckplatten (156, 158) als Teil einer Vakuumanordnung ein Vlies (178) bereitgestellt wird.

10. Verfahren gemäß einem der vorstehenden Ansprüche, wobei nach dem Befestigungsschritt Wärme zum Aushärten des Klebstoffs (174) zugeführt wird.

11. Verfahren gemäß einem der vorstehenden Ansprüche, wobei die Deckplatten (156, 158) zusätzlich mit dem Schersteg (140) verschraubt werden.

12. Verfahren gemäß einem der vorstehenden Ansprüche, wobei die erste Deckplatte (156) und die zweite Deckplatte (158) jeweils einen Flanschabschnitt (162) aufweisen und wobei im befestigten Zustand die Flanschabschnitte (162) formschlüssig miteinander verbunden sind.

13. Verfahren gemäß Anspruch 12, wobei die Flanschabschnitte (162) an eine Kontur des Wurzelendes (142) des Scherstegs (140) angepasst sind.

14. Verfahren gemäß einem der vorstehenden Ansprüche, wobei jede der beiden Deckplatten (156, 158) ein Faserverbundbauteil ist.

15. Windkraftanlagen-Rotorblatt (110) für eine Windkraftanlage, wobei das Windkraftanlagen-Rotorblatt (110) zwei Holmgurte (136) und einen Schersteg (140) aufweist, wobei der Schersteg (140)
- ein Wurzelende (142) und ein Spitzenende (144) aufweist und sich zwischen den Holmgurten (136) entlang einer Längsrichtung (120) des Windkraftanlagen-Rotorblatts (110) vom Wurzelende (142) zum Spitzenende (144) erstreckt,
- zwei gegenüberliegende Längskanten (146) aufweist, wobei jede Längskante (146) einem jeweiligen Holmgurt (136) zugewandt ist und entlang der Längsrichtung (120) verläuft,
- eine erste Seitenfläche (148) und eine zweite Seitenfläche (150) aufweist, die zwischen den beiden gegenüberliegenden Längskanten (146) verlaufen, und
- einen Defekt (152) am Wurzelende (142) aufweist, wobei der Defekt (152) im Wesentlichen entlang der Längsrichtung (120) verläuft,
**dadurch gekennzeichnet, dass**
das Windkraftanlagen-Rotorblatt (110) ferner eine Defektüberbrückungsvorrichtung (154) mit einer ersten Deckplatte (156) und einer zweiten Deckplatte (158) aufweist, wobei die erste Deckplatte (156) an einem ersten Oberflächenbereich (168) der ersten Seitenfläche (148) und die zweite Deckplatte (158) an einem zweiten Oberflächenbereich (170) der zweiten Seitenfläche (150) befestigt ist, so dass beide Deckplatten (156, 158) den Defekt (152) zumindest teilweise abdecken.

## Revendications

1. Procédé de réparation d'une âme de cisaillement (140) d'une pale de rotor d'éolienne (110), la pale de rotor d'éolienne (110) comprenant deux semelles de longeron (136) et une âme de cisaillement (140), l'âme de cisaillement (140) comprenant :
- une extrémité d'emplanture (142) et une extrémité de pointe (144), et s'étendant entre les deux semelles de longeron (136) le long d'une direction longitudinale (120) de la pale de rotor d'éolienne (110), de l'extrémité d'emplanture (142) à l'extrémité de pointe (144),
- deux bords longitudinaux opposés (146), chaque bord longitudinal (146) étant orienté vers une semelle de longeron (136) respective et s'étendant le long de la direction longitudinale (120),
- un premier côté latéral (148) et un deuxième côté latéral (150) s'étendant entre les deux bords longitudinaux opposés (146), et
- un défaut (152) au niveau de l'extrémité d'emplanture (142), le défaut (152) s'étendant essentiellement le long de la direction longitudinale (120),
**caractérisé en ce que** le procédé comprend les étapes consistant à :
- fournir un dispositif (154) de pontage du défaut, comprenant une première plaque de recouvrement (156) et une deuxième plaque de recouvrement (158), la première plaque de recouvrement (156) et la deuxième plaque de recouvrement (158) comprenant chacune une surface intérieure (164) et une surface extérieure (166), et
- coller la première plaque de recouvrement (156), par sa surface intérieure (164), sur une première région de surface (168) du premier côté latéral (148), et coller la deuxième plaque de recouvrement (158), par sa surface intérieure (164), sur une deuxième région de surface (170) du deuxième côté latéral (150), de manière à ce que les deux plaques de recouvrement (156, 158) recouvrent complètement le défaut (152).

2. Le procédé selon la revendication 1, dans lequel les régions de surface (168, 170) sont prétraitées avant l'étape de collage.

3. Le procédé selon la revendication 1, dans lequel la surface intérieure (164) de la première plaque de recouvrement (156) et la surface intérieure (164) de la deuxième plaque de recouvrement (158) sont recouvertes d'un tissu d'arrachage (172).

4. Le procédé selon la revendication 3, dans lequel le tissu d'arrachage (172) recouvrant les surfaces intérieures (164) des plaques de recouvrement (156, 158) est retiré avant l'étape de collage.

5. Le procédé selon l'une quelconque des revendications précédentes, dans lequel, avant l'étape de collage, un adhésif (174) est appliqué sur la surface intérieure (164) de la première plaque de recouvrement (156) et sur la surface intérieure (164) de la deuxième plaque de recouvrement (158) pour les coller à la région de surface (168, 170) respective.

6. Le procédé selon l'une quelconque des revendications précédentes, dans lequel, avant l'étape de collage, un adhésif (174) est appliqué sur chacune des régions de surface (168, 170).

7. Le procédé selon l'une quelconque des revendications précédentes, dans lequel, avant l'étape de collage, un treillis (176) est appliqué sur chacune des deux régions de surface (168, 170), chaque treillis (176) agissant comme une entretoise.

8. Le procédé selon l'une quelconque des revendications précédentes, dans lequel, après l'étape de collage, les deux plaques de recouvrement (156, 158) sont fermement pressées contre les côtés latéraux (148, 150) correspondants par application d'un vide.

9. Le procédé selon la revendication 8, dans lequel un non-tissé (178) est prévu sur les surfaces extérieures (166) des plaques de recouvrement (156, 158) dans le cadre d'un montage sous vide.

10. Le procédé selon l'une quelconque des revendications précédentes, dans lequel, après l'étape de collage, de la chaleur est appliquée pour durcir l'adhésif (174).

11. Le procédé selon l'une quelconque des revendications précédentes, dans lequel les plaques de recouvrement (156, 158) sont en outre vissées à l'âme de cisaillement (140).

12. Le procédé selon l'une quelconque des revendications précédentes, dans lequel la première plaque de recouvrement (156) et la deuxième plaque de recouvrement (158) comprennent chacune une section de bride (162), et dans lequel, à l'état collé, les sections de bride (162) sont reliées l'une à l'autre par complémentarité de forme.

13. Le procédé selon la revendication 12, dans lequel les sections de bride (162) sont adaptées à un contour de l'extrémité d'emplanture (142) de l'âme de cisaillement (140).

14. Le procédé selon l'une quelconque des revendications précédentes, dans lequel chacune des deux plaques de recouvrement (156, 158) est un composant en matériau composite à fibres.

15. Pale de rotor d'éolienne (110) pour une éolienne, la pale de rotor d'éolienne (110) comprenant deux semelles de longeron (136) et une âme de cisaillement (140), l'âme de cisaillement (140) comprenant :
- une extrémité d'emplanture (142) et une extrémité de pointe (144), et s'étendant entre les semelles de longeron (136) le long d'une direction longitudinale (120) de la pale de rotor d'éolienne (110), de l'extrémité d'emplanture (142) à l'extrémité de pointe (144),
- deux bords longitudinaux opposés (146), chaque bord longitudinal (146) étant orienté vers une semelle de longeron (136) respective et s'étendant le long de la direction longitudinale (120),
- un premier côté latéral (148) et un deuxième côté latéral (150) s'étendant entre les deux bords longitudinaux opposés (146), et
- un défaut (152) au niveau de l'extrémité d'emplanture (142), le défaut (152) s'étendant essentiellement le long de la direction longitudinale (120),
**caractérisée en ce que**
la pale de rotor d'éolienne (110) comprend en outre un dispositif (154) de pontage du défaut, comprenant une première plaque de recouvrement (156) et une deuxième plaque de recouvrement (158), la première plaque de recouvrement (156) étant collée sur une première région de surface (168) du premier côté latéral (148) et la deuxième plaque de recouvrement (158) étant collée sur une deuxième région de surface (170) du deuxième côté latéral (150), de manière à ce que les deux plaques de recouvrement (156, 158) recouvrent au moins partiellement le défaut (152).
